# EUROPÄISCHE PATENTSCHRIFT

(11) **EP 0 637 766 B1**
(45) Veröffentlichungstag und Bekanntmachung des Hinweises auf die Patenterteilung: **04.03.1998**
(21) Anmeldenummer: 94108402.2
(22) Anmeldetag: 01.06.1994
(51) Int. Cl.: G02B 6/44

(54) **Verfahren zur Herstellung eines optischen Kabels**
Method of manufacturing an optical cable
Procédé de fabrication d'un câble optique

(30) Priorität: 08.07.1993 DE 4322770
(43) Veröffentlichungstag der Anmeldung: 08.02.1995
(73) Patentinhaber: Norddeutsche Seekabelwerke GmbH, 26954 Nordenham (DE)
(72) Erfinder: Helle, Werner, Dr., D-26954 Nordenham (DE)
(74) Vertreter: Möller, Friedrich, Dipl.-Ing.

(56) Entgegenhaltungen:
- EP-A- 0 311 941
- DE-A- 3 919 135
- DE-A- 3 929 897
- DE-A- 4 212 009

## Beschreibung

Die Erfindung betrifft ein Verfahren zur Herstellung eines optischen Kabels mit einer Seele aus vorzugsweise mehreren Lichtwellenleitern gemäß dem Oberbegriff des Anspruchs 1.

Ein derartiges Verfahren ist aus der DE-A-39 19 135 bekannt.

Lichtwellenleiter weisen gegenüber elektrischen (metallischen) Leitern ungünstigere mechanische Eigenschaften auf. Vor allem sind die beispielsweise aus Glasfasersträngen gebildeten Lichtwellenleiter recht spröde, wodurch sie bei einer Biegebeanspruchung leicht brechen. Diese Eigenschaften der Lichtwellenleiter müssen bei der Herstellung optischer Kabel berücksichtigt werden. Es muß deshalb gewährleistet sein, daß die Lichtwellenleiter während der Herstellung des Kabels nicht in zu engen Bögen geführt, geknickt und übermäßig tordiert werden. Um derartige nachteilige Beeinträchtigungen zu vermeiden, werden die noch nicht von einer Hülle aus insbesondere verseilten Armierungsdrähten umgebenen Lichtwellenleiter mit großem Wickeldurchmesser in Vorratspfannen abgelegt. Von diesen Vorratspfannen werden die Lichtwellenleiter zum Umhüllen mit den Armierungsdrähten abgezogen. Die die Seele des optischen Kabels bildenden Lichtwellenleiter werden dann mittig durch eine Korbverseilmaschine geführt, die die Seele mit den Armierungsdrähten versieht. Die von Vorratsrollen abgezogenen Armierungsdrähte sind auf den Umfang eines oder mehrerer Körbe der Korbverseilmaschine angeordnet. Das hat zur Folge, daß zur Vermeidung unzulässig hoher dynamischer Kräfte der Verseilkorb einer solchen Korbverseilmaschine nur mit begrenzter Drehzahl antreibbar ist, wodurch der Fertigungsgeschwindigkeit natürliche Grenzen gesetzt sind.

Der Erfindung liegt die Aufgabe zugrunde, ein leistungsfähiges und die Lichtwellenleiter schonendes Verfahren zur Herstellung eines optischen Kabels zu schaffen.

Gelöst wird diese Aufgabe durch ein Verfahren mit den Maßnahmen des Anspruchs 1. Vorzugsweise wird eine Rohrverseilvorrichtung verwendet, bei der die Vorratsrollen für die Stränge hintereinander auf der mittigen Drehachse des länglichen Drehrohrs liegen. Dadurch kann mit im Vergleich zur Korbverseilvorrichtung wesentlich höheren Drehzahlen gearbeitet werden. Dadurch kommt eine entsprechend höhere Fertigungskapazität zustande. Problematisch ist jedoch, daß die Seele nicht von einer ebenfalls mittigen Vorratsrolle vor dem Verseilpunkt abgezogen werden kann, weil vor dem Verseilpunkt die einen großen Wickeldurchmesser der Lichtwellenleiter zulassende Vorratspfanne keinen Platz findet. Deshalb wird die Seele der vor der Rohrverseilvorrichtung angeordneten Vorratspfanne entnommen und mittig in die Rohrverseilvorrichtung eingeleitet. Im Bereich der Vorratsrollen wird die Seele des weiteren außermittig, also im Bereich eines Mantels des Drehrohrs, an den Vorratsrollen vorbei, weitergeführt. Diese Maßnahmen ermöglichen es, biege- und knickempfindliche Lichtwellenleiter aus einer Vorratspfanne heraus auf einer Rohrverseil-vorrichtung mit einer hohen Fertigungsgeschwindigkeit zu verarbeiten.

Nach einem weiteren Vorschlag der Erfindung ist vorgesehen, die aus Lichtwellenleiter bestehende Seele mittig der Rohrverseilvorrichtung zuzuführen und vorzugsweise ebenfalls mittig wieder abzuführen, und zwar insbesondere kurz vor einem Verseilpunkt. Auf diese Weise kann zwischen den mittigen Zu- und Abführstellen die Seele außermittig im Bereich des Mantels des Drehrohrs geführt werden, ohne daß dabei die Seele verdreht wird, was zu einer unerwünschten und unzulässigen Torsion der Lichtwellenleiter führen könnte.

Nach einer Weiterbildung des Verfahrens wird die Seele vor allem im Bereich ihrer außermittigen Führung entlang des Mantels des Drehrohrs durch in regelmäßigen Abständen angeordnete Leitorgane geführt. Diese Leitorgane sind in einem solchen Abstand voneinander angeordnet, daß im Bereich zweier aufeinanderfolgender Leitösen die Seele infolge der auf sie einwirkenden Fliehkraft durch das mit hohen Drehzahlen rotierende Drehrohr nicht so weit auswandert, daß die Lichtwellenleiter übermäßigen Biegebeanspruchungen ausgesetzt werden. Des weiteren sind die Leitorgane so ausgebildet, daß sie einen nahezu torsionsfreien und wenig reibungsbehafteten Durchlauf der Seele ermöglichen. Zugspannungen, die beim Hindurchziehen der Seele durch die Rohrverseilvorrichtung und insbesondere die Leitösen entstehen, werden so gering gehalten.

Nach einem weiteren Vorschlag der Erfindung wird vor dem Verseilpunkt eine mögliche Dehnung der Seele rückgängig gemacht, damit in der Seele nach dem Umhüllen derselben mit den verseilten Armierungsdrähten keine bleibende Zugbeanspruchung bestehenbleibt. Die Seele ist dadurch nahezu zugspannungsfrei in der Hülle aus den Armierungsdrähten eingeschlossen. Erreicht werden kann die Rückgängigmachung der Dehnung der Seele durch einen vorzugsweise reibschlüssigen Antrieb der Seele unmittelbar vor dem Verseilpunkt, wobei der Antrieb der Seele mit einer solchen Geschwindigkeit erfolgt, daß im Verseilpunkt die Seele praktisch spannungsfrei ist.

Vorzugsweise wird auch eine eventuell vorhandene Torsion der Seele vor dem Verseilpunkt rückgängig gemacht. Das kann durch schräggestellte Leitrollen geschehen, die mit Reibschluß auf den Mantel der Seele derart einwirken, daß sie die Seele entgegen ihrer Torsion beim Zuführen zum Verseilpunkt verdrehen, nämlich "zurückschrauben".

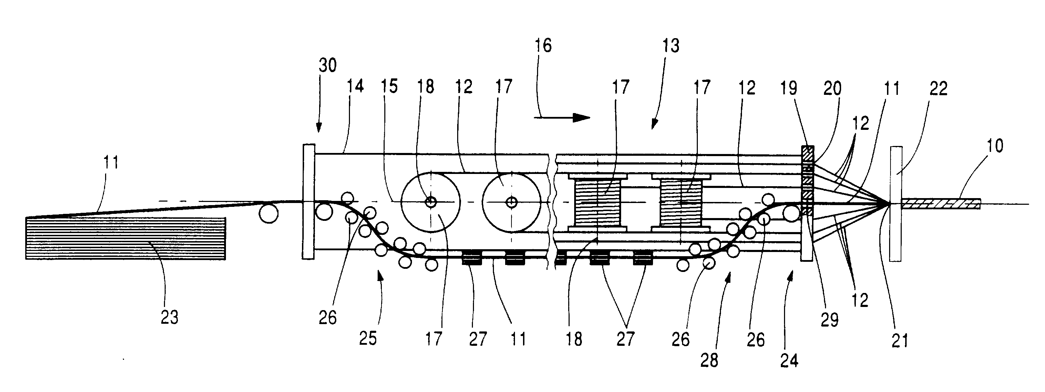

Ein bevorzugtes Verfahren wird nachfolgend anhand der Zeichnung näher erläutert. Die einzige Figur der Zeichnung zeigt eine schematische Seitenansicht einer Rohrverseilvorrichtung.

Das nach dem erfindungsgemäßen Verfahren herzustellende optische Kabel 10 verfügt über eine Seele 11 aus vorzugsweise mehreren Lichtwellenleitern und einer diese umgebenen (nicht gezeigten) Umhüllung aus zum Beispiel Kunststoff. Umgeben ist die Seele 11 von mehreren Strängen, wobei es sich im gezeigten Ausführungsbeispiel um Armierungsdrähte 12 handelt. Diese Armierungsdrähte 12 sind um die Seele 11 herum verseilt zur Bildung einer die Seele 11 insbesondere mechanisch schützenden Hülle. Die Armierungsdrähte 12 wiederum sind von einem Mantel umgeben, der in der Regel auf die Armierungsdrähte 12 aufextrudiert wird. Auf diesen Mantel und seine (übliche) Herstellung wird im folgenden nicht näher eingegangen.

Die in der Zeichnung schematisch dargestellte Rohrverseil-vorrichtung 13 verfügt im wesentlichen über ein längliches (zylindrisches) Drehrohr 14. Das horizontal verlaufende Drehrohr 14 ist um eine durch seine Längsmittelachse verlaufende (mittige) Drehachse 15 kontinuierlich drehend antreibbar. Die Drehzahl des Drehrohrs 14 kann bis zu 1000 U/min betragen. Im Inneren des Drehrohrs 14 sind mehrere in Verseilrichtung 16 hintereinanderliegende Vorratsrollen 17 angeordnet. Auf jeder Vorratsrolle 17 befindet sich ein größerer Vorrat eines Armierungsdrahtes 12. Demzufolge ist im Drehrohr 14 eine Anzahl von Vorratsrollen 17 angeordnet, die der Anzahl der Armierungsdrähte 12 zur Bildung der die Seele 11 umgebenden Hülle entspricht. Jede Vorratsrolle 17 ist mittig im Drehrohr 14 angeordnet, wobei eine Mittelachse 18 jeder Vorratsrolle 17 die Drehachse 15 des Drehrohrs 14 rechtwinklig schneidet. Im gezeigten Ausführungsbeispiel sind die Mittelachsen 18 aufeinanderfolgender Vorratsrollen 17 gegeneinander versetzt. Es ist aber auch denkbar, daß die Mittelachsen 18 aller Vorratsrollen 17 in einer gemeinsamen durch die Drehachse 15 des Drehrohrs 14 verlaufenden Ebene liegen, die gleichzeitig eine Mittelebene des Drehrohrs 14 bildet.

Die von den Vorratsrollen 17 abgezogenen Armierungsdrähte 12 werden parallel zur Drehachse 15 in Verseilrichtung 16 durch das Drehrohr 14 geführt. Am (hinteren) Ende 24 des Drehrohrs 14 befindet sich eine Lochscheibe 19 oder dergleichen mit einem Durchbruch 20 für jeweils einen Armierungsdraht 12. Die Durchbrüche 20 sind gleichmäßig verteilt auf einem konzentrisch zum Außenumfang der Lochscheibe 19 verlaufenden Teilkreisdurchmesser, so daß die Armierungsdrähte 12 mit parallelem Abstand vom Außenumfang der Lochscheibe 19 aus dem Drehrohr 14 heraustreten. Von hier aus werden alle Armierungsdrähte 12 außerhalb des Drehrohrs 14 in Verseilrichtung 16 zusammengeführt zu einem auf einer Verlängerung der Drehachse 15 des Drehrohrs 14 liegenden Verseilpunkt 21. Der Verseilpunkt 21 befindet sich mittig in einem stillstehenden Verseilkopf 22 hinter der Lochscheibe 19 des Drehrohrs 14.

In erfindungsgemäß besonderer Weise wird die aus den Lichtwellenleitern gebildete Seele 11 zum Verseilpunkt 21 geführt. Die Seele 11 wird aus einer vor der Rohrverseilvorrichtung 13 angeordneten Vorratspfanne 23 entnommen. Aus der Vorratspfanne 23 heraus wird die Seele 11 mittig in das (vordere) Ende 30 am Anfang des Drehrohrs 14 eingezogen. Die Seele 11 liegt also beim Einzug in das Drehrohr 14 auf der Drehachse 15 desselben. Hiernach wird die Seele 11 vor der ersten Vorratsrolle 17 von der Drehachse 15 weggeleitet zum Mantel des Drehrohrs 14. Die Seele 11 durchläuft dabei eine Umorientierungszone 25, in der sie durch mehrere Umorientierungsrollen 26 entlang großer, kontinuierlicher Bögen geführt wird. Im Bereich aller Vorratsrollen 17 verläuft die Seele 11 am Mantel des Drehrohrs 14 entlang, also parallel zur Drehachse 15. Auf dieser Strecke wird die Seele 11 durch mehrere Leitorgane geführt. Im gezeigten Ausführungsbeispiel sind die Leitorgane als Leitösen 27 ausgebildet, die mit gleichmäßigem Abstand an der Außenseite des Drehrohrs 14 befestigt sind. Der Abstand aufeinanderfolgender Leitösen 27 ist derart gewählt, daß infolge der auf die Seele 11 beim rotierenden Drehrohr 14 einwirkenden Fliehkräfte die Auslenkung der Seele 11 zwischen zwei Leitösen 27 nur so minimal ist, daß die Lichtwellenleiter der Seele 11 keinen unzulässig großen Biege- und Zugspannungen ausgesetzt werden. Weiterhin sind die Durchmesser der Leitösen so gewählt, daß die Seele 11 mit nur geringer Reibung durch die Leitösen 27 hindurchlaufen kann.

Hinter der in Verseilrichtung 16 letzten Vorratsrolle 17 wird die Seele 11 in einer weiteren Umorientierungszone 28 wiederum zur Drehachse 15 des Drehrohrs 14 geführt. In der Umorientierungszone 28 wird die Seele 11 durch eine Mehrzahl von Umorientierungsrollen 26 wiederum entlang großer Bögen geführt, so daß der Verlauf der Seele 11 in beiden Umorientierungszonen 25 und 28 etwa gleich ist. Nachdem die Seele 11 wiederum zur Drehachse 15 geleitet ist, wird sie durch einen mittigen Durchbruch 29 durch die Lochscheibe 19 am (vorderen) Ende 24 des Drehrohrs 14 hindurchgeführt zum Verseilpunkt 21 des Verseilkopfes 22 außerhalb des Drehrohrs 14. Dabei liegt die Seele 11 auf der Verlängerung der Drehachse 15.

Das Hindurchziehen der Seele 11 und der Armierungsdrähte 12 durch die Rohrverseilvorrichtung 13 erfolgt vom fertigen optischen Kabel 10 bzw. von der mit den Armierungsdrähten 12 versehenen Seele 11 aus. Die Seele 11 kann zur Zugentlastung vor dem Verseilpunkt 21 durch eine in der Figur nicht gezeigte Abzugeinrichtung geführt werden. Diese befindet sich vorzugsweise im Bereich zwischen der Lochscheibe 19 am (vorderen) Ende 24 des Drehrohrs 14 und dem Verseilkopf 22. Die Abzugeinrichtung kompensiert vor dem Verseilpunkt 21 in die Seele 11 eingebrachte Zugspannungen, die durch das Hindurchführen der Seele 11 durch die Rohrverseilvorrichtung 13 und das Abziehen aus der Vorratspfanne 23 entstanden sein können. Die Seele 11 wird auf diese Weise nahezu spannungsfrei in den Verseilkopf 22 eingeleitet. Gegebenenfalls kann die Seele 11 sogar in den Verseilpunkt 21 durch die Abzugeinrichtung "eingeschoben" werden. In jedem Fall wird durch die Abzugeinrichtung sichergestellt, daß die Seele 11 nach dem Aufseilen der Armierungsdrähte 12 im wesentlichen zugspannungsfrei von den Armierungsdrähten 12 eingebettet ist.

Des weiteren kann der Seele 11 vor dem Verseilpunkt 21 eine Torsionsbremse zugeordnet sein. Diese sorgt dafür, daß beim Verseilen der Armierungsdrähte 12 keine Torsion der Seele 11 erfolgt und beim fertigen optischen Kabel 10 die Seele 11 im wesentlichen frei von Torsionsspannungen ist. Gleichzeitig kann die Torsionsbremse Torsionen der Seele 11, die beim Zuführen derselben zum Verseilkopf entstanden sind, rückgängig machen, indem die Seele 11 entsprechend verdreht wird, beispielsweise durch schräggerichtete Führungsrollen, die sowohl freilaufend als auch angetrieben sein können.

## Patentansprüche

1. Verfahren zur Herstellung von optischen Kabeln mit einer Seele aus vorzugsweise mehreren Lichtwellenleitern, wobei die Seele umhüllt wird von verseilten Strängen, insbesondere Armierungsdrähten, **dadurch gekennzeichnet,** daß die Verseilung auf einer Rohrverseilvorrichtung (13) erfolgt, die aus einem Drehrohr (14) mit einer mittigen Drehachse (15) besteht, wobei die Seele (11) der Vorderseite (30) der Rohrverseilvorrichtung (13) mittig zugeführt und im Verlauf der Rohrverseilvorrichtung (13) bereichsweise außermittig, nämlich im Bereich eines Mantels des Drehrohrs (14), geführt wird.

2. Verfahren nach Anspruch 1, dadurch gekennzeichnet, daß die Seele (11) von einem vor der Rohrverseilvorrichtung (13) angeordneten ruhenden Vorrat, insbesondere aus einer Vorratspfanne (23), abgezogen wird.

3. Verfahren nach Anspruch 1 oder 2, dadurch gekennzeichnet, daß die Rohrverseilvorrichtung eine Mehrzahl auf der mittigen Drehachse (15) liegende Vorratsrollen (17) aufweist, und daß die Seele (11) mindestens im Bereich der Vorratsrollen (17) außermittig geführt wird.

4. Verfahren nach einem der Ansprüche 1 bis 3, dadurch gekennzeichnet, daß die Seele (11) kurz vor einem Verseilpunkt (21), an dem die Seele (11) mit den äußeren Strängen (12) versehen wird, in die Mitte der Rohrverseilvorrichtung (13) zurückgeleitet wird.

5. Verfahren nach einem der Ansprüche 1 bis 4, dadurch gekennzeichnet, daß die Seele (11) unmittelbar hinter der in Verseilrichtung (16) letzten Vorratsrolle (17) der Stränge (12) in die Mitte der Rohrverseilvorrichtung (13) geleitet wird.

6. Verfahren nach einem der Ansprüche 1 bis 5, dadurch gekennzeichnet, daß die Seele (11) entlang einer mittigen Drehachse (15) eines drehend angetriebenen, länglichen Drehrohrs (14) oder dergleichen der Rohrverseilvorrichtung (13) zu- und/oder abgeleitet wird.

7. Verfahren nach einem der Ansprüche 1 bis 6, dadurch gekennzeichnet, daß mindestens im Bereich aller Vorratsrollen (17) der Rohrverseilvorrichtung (13) die Seele (11) im wesentlichen parallel zur Drehachse (15) des Drehrohrs (14) geführt wird, vorzugsweise an der Außenseite des Mantels des Drehrohrs (14) entlang.

8. Verfahren nach einem der Ansprüche 1 bis 7, dadurch gekennzeichnet, daß die Seele (11) in demjenigen Bereich der Rohrverseilvorrichtung (13), in dem die Seele (11) außerhalb der Drehachse (15) verläuft, durch in regelmäßigen Abständen am Drehrohr (14) angeordnete Leitorgane, insbesondere Leitösen (27), geführt wird.

9. Verfahren nach einem der Ansprüche 1 bis 8, dadurch gekennzeichnet, daß die Seele (11) in demjenigen Bereich, in dem sie etwa parallel zur Drehachse (15) des Drehrohrs (14) verläuft, mit größere Abstände aufweisenden Leitorganen (27) geführt wird als in denjenigen Zonen, in denen die Seele (11) von der Drehachse (15) weg und/oder zur Drehachse (15) geleitet wird.

10. Verfahren nach einem der Ansprüche 1 bis 9, dadurch gekennzeichnet, daß in einem sich vor dem Verseilpunkt (21) befindlichen Bereich die Dehnung der Seele (11) rückgängig gemacht wird.

11. Verfahren nach Anspruch 10, dadurch gekennzeichnet, daß die Dehnung der Seele (11) in einem vor dem Verseilpunkt (21) liegenden Bereich rückgängig gemacht wird durch einen vorzugsweise reibschlüssigen Antrieb der Seele.

12. Verfahren nach einem der Ansprüche 1 bis 11, dadurch gekennzeichnet, daß eine Torsion der Seele (11) in einem vor dem Verseilpunkt (21) liegenden Bereich verhindert und/oder rückgängig gemacht wird.

13. Verfahren nach Anspruch 12, dadurch gekennzeichnet, daß die Torsion der Seele (11) rückgängig gemacht wird durch schräggestellte Rollen oder dergleichen, die frei drehbar oder angetrieben mit reibschlüssiger Anlage am Mantel der Seele (11) entlanglaufen, wobei die Schrägstellung der Rollen derart ist, daß die Seele (11) entgegen der Torsionsrichtung um eine Längsmittelachse zurückgedreht wird.

## Claims

1. Method of manufacturing optical cables having a core preferably comprising a plurality of optical waveguides, the core being sheathed by twisted strands, in particular reinforcing wires, characterized in that the twisting takes place on a tube twisting device (13), which comprises a rotary tube (14) with a central axis of rotation (15), the core (11) being fed centrally to the front side (30) of the tube twisting device (13) and guided off-centre, to be specific in the region of a circumferential surface of the rotary tube (14), in certain regions over the course of the tube twisting device (13).

2. Method according to Claim 1, characterized in that the core (11) is drawn off from a stationary supply, in particular from a supply tray (23), arranged upstream of the tube twisting device (13).

3. Method according to Claim 1 or 2, characterized in that the tube twisting device has a plurality of supply rollers (17), lying on the central axis of rotation (15), and in that, at least in the region of the supply rollers (17), the core (11) is guided off-centre.

4. Method according to one of Claims 1 to 3, characterized in that the core (11) is directed back into the centre of the tube twisting device (13) shortly before a twisting point (21), at which the core (11) is provided with the outer strands (12).

5. Method according to one of Claims 1 to 4, characterized in that the core (11) is directed into the centre of the tube twisting device immediately after the last supply roller (17) of the strands (12) in the twisting direction (16).

6. Method according to one of Claims 1 to 5, characterized in that the core (11) is directed towards and/or away from the tube twisting device (13) along a central axis of rotation (15) of a rotationally driven, elongate rotary tube (14) or the like.

7. Method according to one of Claims 1 to 6, characterized in that, at least in the region of all the supply rollers (17) of the tube twisting device (13), the core (11) is guided substantially parallel to the axis of rotation (15) of the rotary tube (14), preferably on the outside of the circumferential surface of the rotary tube (14).

8. Method according to one of Claims 1 to 7, characterized in that, in that region of the tube twisting device (13) in which the core (11) runs outside the axis of rotation (15), the core (11) is guided through directing elements, in particular directing eyelets (27), arranged at regular intervals on the rotary tube (14).

9. Method according to one of Claims 1 to 8, characterized in that, in that region in which it runs approximately parallel to the axis of rotation (15) of the rotary tube (14), the core (11) is guided by directing elements having greater intervals than in those zones in which the core (11) is directed away from the axis of rotation (15) and/or towards the axis of rotation (15).

10. Method according to one of Claims 1 to 9, characterized in that, in a region located before the twisting point (21), the elongation of the core (11) is reversed.

11. Method according to Claim 10, characterized in that the elongation of the core (11) is reversed in a region before the twisting point (21) by a preferably frictional driving of the core.

12. Method according to one of Claims 1 to 11, characterized in that a torsion of the core (11) is prevented and/or reversed in a region before the twisting point (21).

13. Method according to Claim 12, characterized in that the torsion of the core (11) is reversed by inclined rollers or the like, which run along, freely rotatably or driven, in frictional contact with the circumferential surface of the core (11), the inclined position of the rollers being such that the core (11) is rotated back contrary to the direction of torsion about a longitudinal centre axis.

## Revendications

1. Procédé de fabrication de câbles optiques ayant une âme faite, de préférence, de plusieurs guides d'ondes optiques qui est enveloppée par des cordes, en particulier des fils d'armure, câblés, caractérisé par le fait que le câblage est exécuté dans un dispositif de câblage à tube (13) qui est constitué d'un tube tournant (14) ayant un axe central de rotation (15), l'âme (11) étant amenée au centre au côté avant (30) du dispositif de câblage à tube (13) et, le long de ce dispositif (13), conduite excentrée par endroits, à savoir dans la zone d'une paroi du tube tournant (14).

2. Procédé selon la revendication 1, caractérisé par le fait que l'âme (11) est tirée d'une provision au repos placée avant le dispositif de câblage à tube (13), en particulier d'une cuvette alimentaire (23).

3. Procédé selon l'une des revendications 1 et 2, caractérisé par le fait que le dispositif de câblage à tube (13) présente un certain nombre de bobines alimentaires (17) situées sur l'axe central de rotation (15), et que l'âme est conduite excentrée au moins dans la zone de ces bobines alimentaires (17).

4. Procédé selon l'une des revendications 1 à 3, caractérisé par le fait que l'âme (11) est, peu avant un point de câblage (21) où elle est pourvue des cordes extérieures (12), ramenée au centre du dispositif de câblage à tube (13).

5. Procédé selon l'une des revendications 1 à 4, caractérisé par le fait que l'âme (11) est menée au centre du dispositif de câblage à tube (13) immédiatement après la bobine alimentaire de cordes (17) la dernière dans la direction de câblage (16).

6. Procédé selon l'une des revendications 1 à 5, caractérisé par le fait que l'âme (11) est amenée et/ou évacuée le long d'un axe central de rotation (15) d'un tube allongé soumis à rotation (14) ou d'un élément semblable du dispositif de câblage à tube (13).

7. Procédé selon l'une des revendications 1 à 6, caractérisé par le fait qu'au moins dans la zone de toutes les bobines alimentaires (17) du dispositif de câblage à tube (13), l'âme (11) est conduite sensiblement parallèlement à l'axe de rotation (15) du tube (14), de préférence sur la face extérieure de la paroi du tube (14).

8. Procédé selon l'une des revendications 1 à 7, caractérisé par le fait que l'âme (11), dans la zone du dispositif de câblage à tube (13) dans laquelle elle est écartée de l'axe de rotation (15), est guidée par des organes directeurs, en particulier des oeillets directeurs (27), placés à intervalles réguliers sur le tube tournant (14).

9. Procédé selon l'une des revendications 1 à 8, caractérisé par le fait que l'âme (11), dans la zone dans laquelle elle est à peu près parallèle à l'axe de rotation (15) du tube (14), est guidée par des organes directeurs (27) plus espacés que dans les zones dans lesquelles elle s'écarte ou se rapproche de l'axe de rotation (15).

10. Procédé selon l'une des revendications 1 à 9, caractérisé par le fait que, dans une zone située avant le point de câblage (21), est produite l'élimination de l'allongement de l'âme (11).

11. Procédé selon la revendication 10, caractérisé par le fait que l'élimination de l'allongement de l'âme (11) est produite dans une zone située avant le point de câblage (21) par un entraînement de préférence à friction de l'âme.

12. Procédé selon l'une des revendications 1 à 11, caractérisé par le fait qu'une torsion de l'âme (11) est empêchée et/ou éliminée dans une zone située avant le point de câblage (21).

13. Procédé selon la revendication 12, caractérisé par le fait que la torsion de l'âme (11) est éliminée par des rouleaux obliques ou des éléments semblables qui roulent fous ou entraînés avec appui à friction sur l'enveloppe de l'âme (11), l'obliquité de ces rouleaux étant telle que l'âme soit tordue en sens contraire du sens de torsion autour d'un axe longitudinal.
